# EUROPEAN PATENT APPLICATION

(11) **EP 2 159 086 A2**
(43) Date of publication of application: **03.03.2010**
(21) Application number: 09169069.3
(22) Date of filing: 31.08.2009
(51) Int. Cl.: B60H 1/32

(54) **Climate control systems and methods for a hybrid vehicle**

(30) Priority: 29.08.2008 US 202166
(71) Applicant: PACCAR INC, Bellevue, WA 98004 (US)
(72) Inventor: Kahn, William C., Corinth, TX 76210 (US); Marshall, Glen A., Denven, Iowa 50622 (US)
(74) Representative: Körber, Martin Hans

(57) **Abstract**

Climate control systems are provided that are suitable for providing climate control functionality to a hybrid vehicle. The system is capable of operating in dual modes, depending on the present operational state of the vehicle. For example, the dual modes may be as follows: (1) when the vehicle is currently in transit, including intermittent stops, the climate control system is capable of operating at its maximum output, as requested, for cooling the passenger compartment of the vehicle; and (2) when the vehicle is not in transit (e.g., when parked) the climate control system operates at a reduced capacity in order for the climate control system to be powered by the energy storage device for a set period of time. The climate control system may reduce the capacity based on energy reserve levels in the energy storage device.

## Description

### BACKGROUND

Air conditioning systems are well known for climate control in vehicles. The compressors of these air conditioning systems in conventional vehicles are belt driven by the internal combustion engine. Therefore, when the internal combustion engine is turned off, the A/C compressor is also turned off. Although not a problem during the operation of conventional vehicles, this can pose a problem when conventional vehicles and hybrid electric vehicles (HEVs) are parked for long periods or during the operation of hybrid HEVs because the internal combustion engine in such HEVs is frequently shut off while the vehicle is stopped, for example, at a stop light, or during low vehicle speeds (or low vehicle power demands).

Air conditioning systems are important in Class 8 trucks, which typically include a sleeper section as part of the cab for providing sleeping or resting quarters for the operator during government mandated rest periods. Historically, during these periods, the internal combustion engine of the conventional truck would idle in order to supply power for "house" loads and for climate control systems, such as air conditioning units.

To address this deficiency, and in order to reduce fuel consumption and to cut emissions, newer trucks employ a small diesel powered generator so that the main engine need not idle during these rest periods. However, these systems are not without problems.

### SUMMARY

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

In accordance with aspects of the present invention, a climate control system is provided for a hybrid heavy duty vehicle having an engine-on condition while driving and an engine-off condition while parked. The system includes an electrically powered compressor, an energy storage device connected in electrical communication with the electrically powered compressor for supplying power thereto, at least one sensor capable of outputting signals indicative of an engine-on condition or an engine-off condition, and a controlling component operable to receive the signals of the at least one sensor, and based on the signals and energy storage level data from the energy storage device, operate to selectively control the power supplied to the electrically powered compressor so as to provide a first compressor output level during a vehicle engine-on condition and a second, lower, compressor output level during a vehicle engine-off condition. The second compressor output level may be selected so as to allow the compressor to operate at a lower output as compared to the first compressor output level for a predetermined period of time.

In accordance with another aspect of the present invention, a hybrid vehicle is provided having an engine-on condition while driving and an engine-off condition while parked. The vehicle comprises a fuel powered engine having an engine-on condition and an engine-off condition, a motor, and a first controlling component for controlling the operation of the fuel powered engine and the motor. The first controlling component can control the transition of the fuel powered engine between the engine-on condition and the engine-off condition. The vehicle also includes an electrically powered compressor, an energy storage device connected in electrical communication with the electrically powered compressor for supplying power thereto, and at least one sensor capable of outputting signals indicative of an engine-on or an engine-off condition. The vehicle further includes a second controlling component operable to receive the signals of the at least one sensor, and based on the signals and a state of charge of the energy storage device, operate to selectively regulate the power supplied to the electrically powered compressor so as to provide a first compressor output level during a vehicle engine-on condition and a second, lower, compressor output level during a vehicle engine-off condition. The second compressor output level may be selected so as to allow the compressor to operate at a lower output as compared to the first compressor output level for a predetermined period of time.

In accordance with yet another aspect of the present invention, a climate control method is provided for a vehicle having an electrical compressor powered by an energy storage device. The method comprises the steps of: obtaining a signal from an A/C power switch; obtaining data regarding the current state of operation of the vehicle; obtaining energy reserve level data of the energy storage device; determining the energy level to be supplied to the electrical compressor; and controlling the energy supplied to the electrical compressor.

### DESCRIPTION OF THE DRAWINGS

The foregoing aspects and many of the attendant advantages of this invention will become more readily appreciated by reference to the following detailed description, when taken in conjunction with the accompanying drawings, wherein:
FIGURE 1 is a partial schematic diagrammatic view of one embodiment of a climate control system formed in accordance with aspects of the present invention;
FIGURE 2 is a schematic diagrammatic view of one suitable vehicle in which the climate control system of FIGURE 1 may be employed;
FIGURE 3 is a functional block diagrammatic view of one embodiment of a vehicle-wide network or CAN formed in accordance with aspects of the present invention; and
FIGURE 4 is a flow diagram of one exemplary method implemented by the climate control system in accordance with aspect of the present invention.

### DETAILED DESCRIPTION

Embodiments of the present invention will now be described with reference to the drawings where like numerals correspond to like elements. Embodiments of the present invention are generally directed to climate control systems and methods suitable for use in vehicles, such as Class 8 trucks. More particularly, embodiments of the present invention are directed to climate control systems having dual operating modes, which can be suitable for use with vehicles of the hybrid type (e.g., gas-electric, diesel-electric, etc.). As will be described in more detail below, the climate control system functioning in the first mode is capable of operating at a maximum output in transit, and functioning in the second mode is capable of operating at a lower output than the first mode as a result of present operating parameters of the vehicle (e.g., the vehicle is parked).

Although exemplary embodiments of the present invention will be described hereinafter with reference to a hybrid powered heavy duty truck, it will be appreciated that aspects of the present invention have wide application, and therefore, may be suitable for use with many other types of vehicles, including but not limited to light & medium duty vehicles, passenger vehicles, motor homes, buses, commercial vehicles, marine vessels, etc., that are hybrid powered. Accordingly, the following descriptions and illustrations herein should be considered illustrative in nature, and thus, not limiting the scope of the present invention, as claimed.

Prior to discussing the details of various aspects of the present invention, it should be understood that the following description includes sections that are presented largely in terms of logic and operations that may be performed by conventional electronic components. These electronic components, which may be grouped in a single location or distributed over a wide area, can generally include processors, memory, storage devices, input/output circuitry, etc. It will be appreciated by one skilled in the art that the logic described herein may be implemented in a variety of configurations, including but not limited to, analog circuitry, digital circuitry, processing units, etc., and combinations thereof. In circumstances were the components are distributed, the components are accessible to each other via communication links.

In the following description, numerous specific details are set forth in order to provide a thorough understanding of exemplary embodiments of the present invention. It will be apparent to one skilled in the art, however, that many embodiments of the present invention may be practiced without some or all of the specific details. In some instances, well-known process steps have not been described in detail in order not to unnecessarily obscure various aspects of the present invention.

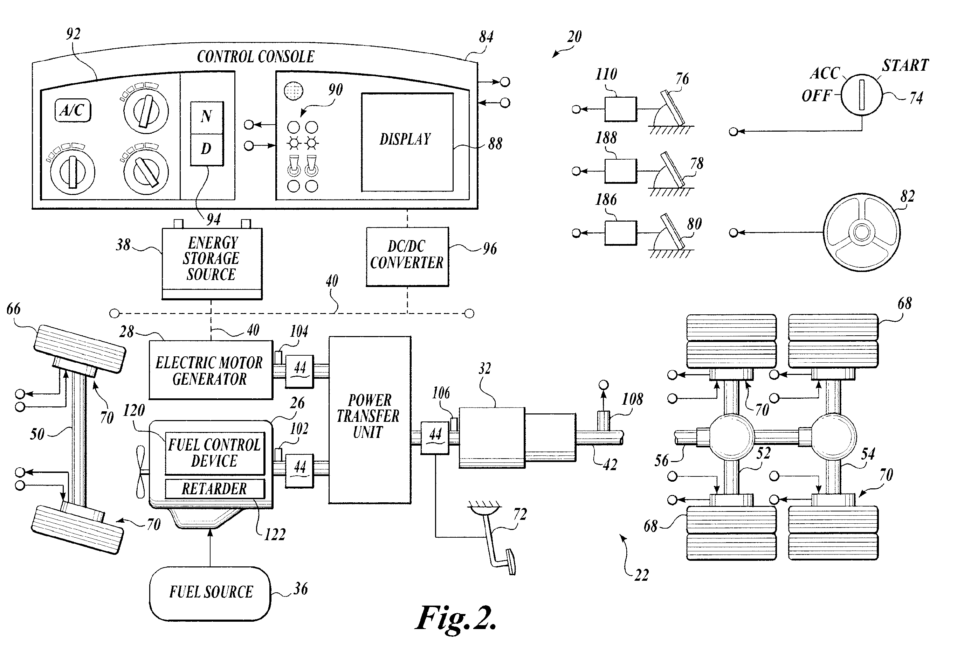

As briefly described above, embodiments of the present invention are directed to climate control systems and methods suitable for use in a vehicle. One suitable vehicle in which the climate control systems may be employed will now be described in more detail with reference to FIGURE 2. Turning now to FIGURE 2, there is shown a vehicle 20, such as a Class 8 tractor, having one suitable embodiment of a parallel hybrid powertrain 22. The vehicle 20 depicted in FIGURE 2 represents one of the possible applications for the systems and methods of the present invention. It should be appreciated that aspects of the present invention transcend any particular type of land or marine vehicle employing a hybrid powertrain. Moreover, the hybrid powertrain 22 depicted in FIGURE 2 has a parallel configuration, although hybrid powertrains with series configurations, or combined hybrid configurations (i.e., hybrids that operate in some manner as a parallel hybrid and a series hybrid) may also be employed.

One of ordinary skill in the art will appreciate that the hybrid powertrain 22 and associated subsystems/components may include many more components than those depicted in FIGURE 2. For the sake of brevity, these additional components have not be described herein. However, it is not necessary that all of these generally conventional components be shown or described in order to disclose an illustrative embodiment for practicing the present invention, as claimed.

In the embodiment shown in FIGURE 2, the hybrid powertrain 22 includes an internal combustion engine 26, an electric motor/generator 28, a power transfer unit 30, and a transmission 32. The hybrid powertrain 22 also includes a fuel source 36 or the like that stores any suitable combustive fuel, such as gasoline, diesel, natural gas, alcohol, etc. In use, the internal combustion engine 26 receives fuel from the fuel source 36 and converts the energy of the fuel into output torque. The powertrain 22 further comprises an electrical energy storage device 38 in the form of a high voltage battery, a bank of batteries or a capacitor. Alternatively, a device such as a fuel cell may be used in conjunction with a battery and/or capacitor to provide a source of electrical power for the powertrain 22. In use, the electric motor generator 28 can receive electrical energy from the energy storage device 38 via a high voltage DC bus 40 and converts the electrical energy into output torque. The electric motor generator 38 can also operate as a generator for generating electrical energy to be stored in the electrical energy storage device 38.

Still referring to FIGURE 2, the power transfer unit 30 operatively interconnects the internal combustion engine 26, the electric motor generator 28, and the transmission 32. The transmission 32 may be a manual transmission, an automated manual transmission, or an automatic transmission that includes multiple forward gears and a reverse gear operatively connected to an output shaft 42, and a neutral position that disconnects the output shaft from the torque inputted into the transmission 32. The power transfer unit 30 is configured for selectively switching between multiple vehicle operating states, which include but are not limited to: 1) a state where only the output torque of the engine 26 is transmitted through the transmission 32 to the output shaft 42; 2) a state where only the output torque generated by the electric motor 28 is transferred through the transmission 32 to the output shaft 42; 3) a state where the output torque of the internal combustion engine 26 and the electric motor generator 28 is combined and transferred through the transmission 32 to the output shaft 42; and 4) a state where the internal combustion engine 26 transmits output torque to the output shaft 42 through the transmission 32 and transmits output torque to the electric motor generator 28 so that the electric motor generator 28 acts as a generator for generating electrical energy to charge the energy storage device 38. A regenerative braking state of vehicle operation may also be provided by the power transfer unit 30, as known in the art.

One or more clutch assemblies 44 may be positioned between the internal combustion engine 26 and electric motor generator 28 and the power transfer unit 30 and/or the transmission 32 to selectively engage/disengage the internal combustion engine 26 and/or electric motor generator 28 from the power transfer unit 30 and/or the transmission 32. The one or more clutch assemblies 44 may be part of the power transfer unit 30 or may be discrete therefrom. In one embodiment, the power transfer unit 30 may include a planetary gear set conventionally arranged for carrying out the functions 1-4 described above. Of course, other types of power transfer units, including other gear sets and transmissions, may be employed. In another embodiment, the power transfer unit 30 and the transmission 32 may be arranged as a unitary device that provides both the functions of the power transfer unit 30 and that of the transmission 32. One type of unitary device that may be employed by the powertrain 22 is known in the art as a power split device.

The vehicle 20 also includes at least two axles such as a steer axle 50 and at least one drive axle, such as axles 52 and 54. The output shaft 42 of the transmission 32, which may include a vehicle drive shaft 56, is drivingly coupled to the drive axles 52 and 54 for transmitting the output torque generated by the internal combustion engine 26 and/or the electric motor generator 28 to the drive axles 52 and 54. The steer axle 50 supports corresponding front wheels 66 and the drive axles 52 and 54 support corresponding rear wheels 68, each of the wheels having service brake components 70. The service brake components 70 may include wheel speed sensors, electronically controlled pressure valves, and the like, to effect control of the vehicle braking system.

The vehicle 20 may also include conventional operator control inputs, such as a clutch pedal 72 (in some manual systems), an ignition or power switch 74, an accelerator pedal 76, a service brake pedal 78, a parking brake 80 and a steering wheel 82 to effect turning of the front wheels 66 of the vehicle 20. The vehicle 20 may further include a cab mounted operator interface, such as a control console 84, which may include any of a number of output devices 88, such as lights, graphical displays, speakers, gages, and the like, and various input devices 90, such as toggle switches, push button switches, potentiometers, or the like.

As will be described in more detail below, the input devices 90 may include an A/C control panel 92 and an optional mode switch 94. To provide power to the control console 84, a DC/DC converter 96 is connected to the high voltage bus 40. The DC/DC converter 96 reduces the voltage it receives, and outputs power at this lower voltage to the control console. The DC/DC converter 96 can output power to other low voltage electrical devices on the vehicle 20. The DC/DC converter 96 may also condition the power prior to directing it to the low voltage electrical devices.

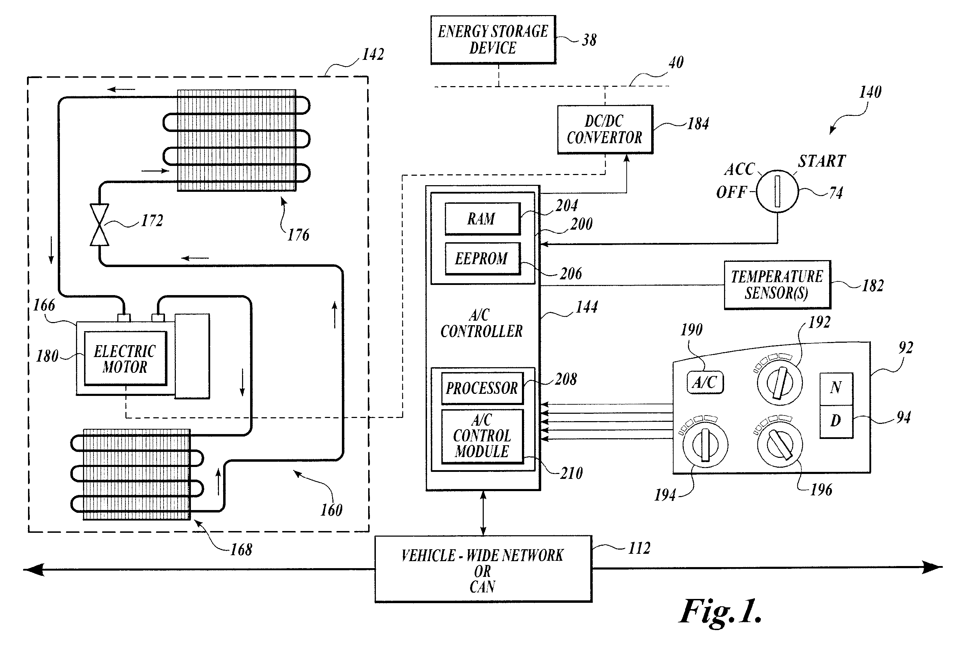

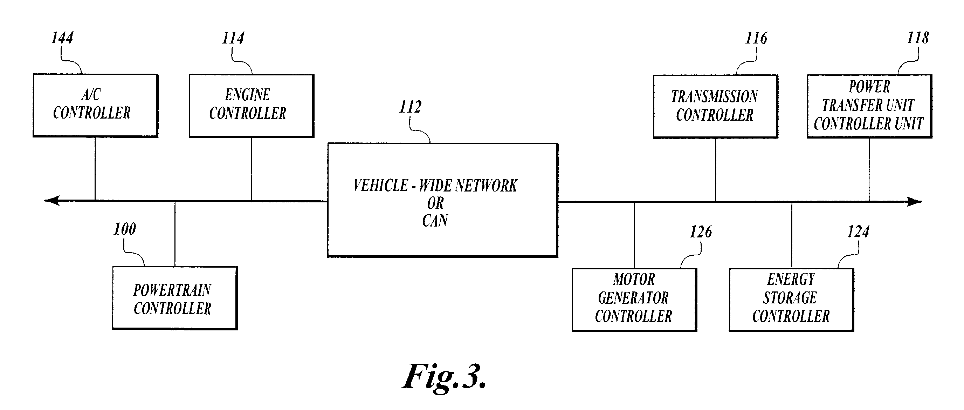

To control the various aspects of the hybrid powertrain 22, a powertrain controller 100 is provided. As shown in FIGURES 1 and 3, the powertrain controller 100 can be a dedicated controller for the hybrid powertrain 22 or can be incorporated in another general vehicle controller, such as a vehicle system controller (VSC). Although the powertrain controller 100 is shown as a single controller, it may include multiple controllers or may include multiple software components or modules embedded in a single controller. For example, the powertrain controller 100 could be a separate hardware device, or may include a separate powertrain control module (PCM), which could be software embedded within general purpose controller, such as a VSC.

In one embodiment, the powertrain controller 100 may control the operation of one or more of the following devices: the internal combustion engine 26; the electric motor generator 28; the power transfer unit 30; the transmission 32; the electrical storage device 38, optional clutch assemblies 42, etc. In one embodiment, the powertrain controller 100 may include a programmable digital computer, microprocessor, or the like that is configured to receive (and may store) various input signals, including without limitation, the operating speeds of internal combustion engine 26 via sensor 102 and the electric motor generator 28 via sensor 104, transmission input speed via sensor 106, selected transmission ratio, transmission output speed via sensor 108 and vehicle speed via wheel speed sensors (not shown), throttle position via sensor 110, and state of charge (SOC) of the energy storage device 38. The powertrain controller 100 may store these signals for contemporaneous or future use. The powertrain controller 100 processes these signals and others accordingly to logic rules to control the operation of the hybrid powertrain 22. For example, to start or restart the internal combustion engine 26, the powertrain controller 100 may be programmed to signal delivery of fuel to the internal combustion engine 26 and to signal the operation of the electrical motor generator or optional starter to start the engine. It will be appreciated that the powertrain 100 may receive these input signals directly from the associated sensor(s), devices, etc., or may receive the input signals from other vehicle subsystems, as will be described in more detail below.

To support this control, various devices (e.g., the internal combustion engine 26, the electric motor generator 28, etc.) controlled by the powertrain controller 100 may include their own controllers, which communicate with the powertrain controller 100 through a vehicle-wide network, also referred to as a controller area network (CAN) 112, as shown in FIGURE 3. Those skilled in the art and others will recognize that the CAN 112 may be implemented using any number of different communication protocols such as, but not limited to, Society of Automotive Engineer's ("SAE") J1587, SAE J1922, SAE J1939, SAE J1708, and combinations thereof. Alternatively, the aforementioned controllers may be software control modules contained within the powertrain controller 100 or other general purpose controllers residing on the vehicle. It will be appreciated, however, that the present invention is not limited to any particular type or configuration of powertrain controller 100, or to any specific control logic for governing operation of hybrid powertrain system 20.

For example, an engine controller 114 may communicate with the powertrain controller 100 and may function to monitor and control various aspects of the operation of the internal combustion engine 26, including ignition timing (on some vehicles), fuel delivery, variable valve timing (if equipped) and the like. To that end, the engine controller 114 typically receives signals from a variety of sensors, including but not limited to the wheel speed sensors (not shown) of the brake components 70, the engine speed sensor 102, the accelerator pedal position sensor 108, etc., either directly or by other system or device controllers (i.e., a transmission controller 116, a power transfer unit controller 118, the powertrain controller 100, etc.), processes such signals and others, and transmits a variety of control signals to devices including but not limited to fuel control devices 120 for selectively supplying fuel to the internal combustion engine 26, an engine retarder 122, such as a jake brake, etc.

As will be described in more detail below, the engine controller 114 may transmit signals indicative of vehicle operational data (e.g., engine speed, throttle position, etc.) to the powertrain controller 100 or other system controllers via the CAN 112 and may receive control signals from the powertrain controller 100 or from controllers of other vehicle subsystems either directly or via CAN 112 to effect the operation of the internal combustion engine 26.

Similarly, the electrical energy storage device 38 may have a controller 124 that may communicate with the powertrain controller 100 and may function to monitor and control various aspects of the operation of the electrical energy storage device 38. To that end, the energy storage controller 124 sends and receives signals to and from the powertrain controller 100 and the electrical energy storage device 38. For example, the controller 124 may receive signals from a variety of sensors, etc., such as voltage data, current data, charge and discharge data (e.g., in amp hours), temperature data and/or other state of charge (SOC) determination data etc., and appropriately processes such signals. In one embodiment, the controller 124 continuously determines the SOC of the electrical energy storage device 38. In another embodiment, the controller 124 determines the SOC of the electrical energy storage device 38 upon control signals sent by the powertrain controller 100. In another embodiment, the controller 124 sends the processed signals to the powertrain controller 100, where they are processed to determine, for example, the SOC of the electrical energy storage device 38.

Moreover, the electric motor generator 28 may include one or more controllers 126 that sends and receives signals to and from the powertrain controller 100 and the electric motor generator 28 for controlling the direction of power flow to/from the electric motor generator 28. The vehicle may include other controllers, such as a braking system controller (not shown), as well known in the art, communicatively connected to the CAN 112.

As used herein, controllers, control units, control modules, program modules, etc., can contain logic for carrying out general or specific operational features of the vehicle 20. The logic can be implemented in hardware components, such as analog circuitry, digital circuitry, processing units, or combinations thereof, or software components having instructions which can be processed by the processing units, etc. Therefore, as used herein, the term "controlling component" can be used to generally describe these aforementioned components, and can be either hardware or software, or combinations thereof, that implement logic for carrying out various aspects of the present invention.

Referring now to FIGURES 1 and 2, in one embodiment of the present invention, the powertrain controller 100, either alone or in conjunction with other controllers can control the operation of the vehicle in the following manner. It will be appreciated that the vehicle can be controlled to operate in any number of ways or modes. Additionally, it should be appreciated that the following description of the operation of the vehicle in accordance to one embodiment relates to a parallel hybrid vehicle, and that the operation of vehicles with serial hybrid powertrains, combined hybrid powertrains, or power assist hybrids will be slightly different.

When it is desired to start the hybrid vehicle 20 from rest (i.e., parked), the ignition switch 74 is moved to the start position. Next, the vehicle operator chooses the appropriate gear, releases the parking brake 80, if set, lifts their foot off of the service brake pedal 78, and applies pressure on the accelerator pedal 76. At this time, the powertrain controller 100 monitors various hybrid powertrain operating parameters, for example, the SOC of the energy storage device 38 and the load state of the vehicle 20, and depending on the SOC of the energy storage device 38 and the load state of the vehicle (typically calculated by accelerator pedal position and/or vehicle speed), the powertrain controller 100 controls the operation of the electric motor generator 28 only ("electric launch mode"), the internal combustion engine 26 only, or combines the output of both via the power transfer unit 30 ("blended torque mode") to provide motive force to the vehicle 20.

For example, if the powertrain controller 100 determines that the SOC of the energy storage device 38 is at a sufficient level with respect to the vehicle load state, the powertrain controller 100 operates the powertrain 22 in the electric launch mode. For example, in a low load state and/or a low vehicle speed, and a high SOC, the powertrain controller 100 operates solely in the electric launch mode. In the electric launch mode, the internal combustion engine 26 is off (engine-off condition), and the powertrain controller 100 signals delivery of electrical energy from the electrical energy storage device 38 to power the electric motor generator 28. Upon receipt of electrical power from the electrical energy storage device 38, the electric motor generator 28 acts as a motor to generate output torque for propelling the vehicle 20.

On the other hand, if the powertrain controller 100 determines that the SOC of the energy storage device 38 is low with respect to the calculated vehicle load state, the powertrain controller 100 operates the powertrain 22 either in the hybrid assist mode, also known as the "blended torque mode," or the engine only mode. In the blended torque mode, the power controller 100 signals delivery of electrical energy from the electrical energy storage device 38 to power the electric motor generator 28 and fuel delivery to the internal combustion engine 26 so as to be started by the electric motor generator 28, and then signals the internal combustion engine 26 and the energy storage device/electric motor generator to generate output torque, which is "blended" or combined by the power transfer unit 30 according to control signals from the powertrain controller 100. For example, in a medium load state where the powertrain controller 100 determines that improved fuel efficiency may be realized by operating in the blended torque mode, or if additional torque is needed from the electric motor generator 28 during, for example, rapid acceleration situations, the internal combustion engine 26 and the electric motor generator 28 are operated by the powertrain controller 100 so that the generated output torque is combined by the power transfer unit 30 and sent to the drive axles 52 and 54 through the transmission 32.

It should also be appreciated that the vehicle 20 may start out in electric launch mode, but based on continuously monitored operating conditions of the powertrain, e.g., SOC and vehicle load, the powertrain controller 100 may determine that the internal combustion engine 26 is needed to meet the output demands of the vehicle 20. In this case, the powertrain controller 100 signals for the internal combustion engine 26 to be started by the electric motor generator 28 or a separate starter motor, and signals the appropriate components, e.g., power transfer unit 30, clutch assemblies 44, etc. to combine the output torque of the internal combustion engine 26 and the electric motor generator 28 for propelling the vehicle 20.

When the hybrid vehicle 20 is cruising (i.e. not accelerating), and the internal combustion engine 26 can meet the vehicle load demand, the powertrain controller 100 controls the operation of the internal combustion engine 26, the electric motor generator 28, and the power transfer unit 28 based on the SOC of the energy storage device 38. If the energy storage device SOC is low, the powertrain controller 100 operates the power transfer unit 30 to split the power from the internal combustion engine 26 between the drive axles 52, 54 and the electric motor generator 28 so that the electric motor generator 28 acts as a generator and charges the energy storage device 38. This is called the "utility regeneration" mode. If the SOC of the energy storage device 38 is high, the powertrain controller 100 may operate the internal combustion engine 26 solely to propel the vehicle, or may operate the power transfer unit 32 and the electric motor generator 28 in the blended torque mode, as described above.

At any time the powertrain controller 100 determines during vehicle operation that the SOC of the energy storage device 38 becomes equal to or lower than a threshold level, the internal combustion engine 26 is immediately driven, and the output torque of the internal combustion engine 26 is transmitted to the electric motor generator 28 through the power transfer device 30. In this case, the electric motor generator 28 is operated as a power generator to charge the energy storage device 38. This may occur during vehicle transit or idling situations as well.

The energy storage device 38 may also be charged during vehicle movement via the regenerative braking mode. That is, instead of using the brakes to slow or stop the vehicle 20, the electric motor generator 28 is used to slow the vehicle 20. At the same time, the energy from the rotating rear wheels 68 is transferred to the electric motor generator 28 via the transmission 32 and power transfer unit 30 (the internal combustion engine 26 is either in the engine-off mode or is decoupled from the power transfer unit 30 by a clutch assembly 44), which in turn, causes the electric motor generator 28 to act as a generator to charge the energy storage device 38.

Referring now to FIGURE 1, there is shown a block diagrammatic view of one embodiment of a climate control system, generally designated 140, formed in accordance with aspects of the present invention. The climate control system 140 is suitable for use in a vehicle, such as the vehicle 20 described above, for providing climate control functionality to a hybrid vehicle. As will be described in more detail below, the system 140 is capable of operating in dual modes, depending on the present operational state of the vehicle. In one embodiment, the dual modes are as follows: (1) when the vehicle is currently in transit, including intermittent stops, the climate control system 140 is capable of operating at its maximum output, as requested, for cooling the passenger compartment of the vehicle; and (2) when the vehicle is not in transit (e.g., when parked) the climate control system 140 operates at a reduced capacity in order for the climate control system to be powered by the energy storage device 38 for a set period of time. As will be described in more detail below, the climate control system 140 reduces the capacity based on energy reserve levels in the energy storage device 38.

As best shown in the embodiment of FIGURE 1, the climate control system 140 generally includes an air conditioning unit 142 for performing air-conditioning control in a passenger compartment of the vehicle 20, such as the cab and/or sleeper section of a Class 8 truck. The climate control system 140 also includes air conditioning controller 144 for controlling components of the air conditioning unit 142 via inputs from the air conditioning (A/C) control panel 92, the ignition switch 74, and/or the optional mode switch 94. In one embodiment, the air conditioning unit 142 may be an automatic-controlled air conditioner where the temperature in the passenger compartment is automatically controlled at a temperature set arbitrarily by the operator. Alternatively, the air conditioning unit 142 may be a manually controlled air conditioner where the temperature in the passenger compartment is manually controlled by the operator though manipulation of inputs on the control panel 92.

As shown in FIGURE 1, the air conditioning unit 142 generally includes a refrigerant cycle system 160 that lowers the temperature of air flowing via a blower (not shown) through air-conditioning ducting of the vehicle and into the passenger compartment. In one embodiment, the refrigerant cycle system 160 general includes an electrical compressor 166, a condenser 168, an expansion valve 172, and an evaporator 176 operatively connected in a conventional manner. The air conditioning unit 142 may include other components not shown but well known in the art, such as a heater core, a gas-liquid separator, an accumulator, air mix dampers, air directional dampers or diverters, etc.

In the embodiment shown, the electrical compressor 166 includes an electric motor 180 for driving a compression mechanism (not shown) using electrical power from the electrical energy storage device 38. To that end, the electrical compressor 166 is electrically connected to the high voltage DC Bus 40 via a variable output DC to DC converter 184, which outputs a variable DC voltage based on instructions from the air conditioning controller 144. The electrical compressor 166 is sized to replace the engine driven unit of conventional vehicles. In one embodiment, the electrical compressor 166 has a variable capacity of up to about 33,000 BTU/hour, although higher or lower capacity compressors may be used by embodiments of the present invention, as claimed.

While a variable DC voltage is applied to the compressor motor 180 via the DC to DC converter 184 to control the output of the air conditioning unit 142, it will be appreciated that in another embodiment, an alternating-current (AC) voltage may be applied to an appropriately configured electrical motor, such as an AC induction motor, through an inverter, which is configured for adjusting a frequency of the AC voltage based on instructions from the air conditioning controller 144. Thus, the rotation speed of the electrical compressor 166 can be continuously changed.

As best shown in FIGURE 1, the air conditioning controller 144 is connected in electrical communication with the control panel 92, the optional mode switch 94 and/or the vehicle ignition switch 74, one or more sensors 182 (e.g., temperature sensors), and the DC to DC converter 184. In use, the Air conditioning controller 144 receives input signals from the control panel 92, the one or more sensors 182 and/or other input signals, the optional mode switch 94 or the vehicle ignition switch 74, processes these signals and others according to logic rules to be described in detail below, and transmits control signals to the DC to DC converter 184 in order to control the amount of energy transmitted to the electrical compressor 166.

It will be appreciated that the one or more sensors 182, switches 74 and 94, etc., or other control inputs from the control panel 92 may transmit their signals directly to the air conditioning controller 144, as shown in FIGURE 1, or may communicate with the air conditioning controller 144 via the CAN 102. It will be appreciated that the air conditioning controller 144 may communicate with other electronic components of the vehicle 20 over the CAN 102 for collecting data from other electronic components to be utilized by the air conditioning controller 144. For example, the engine controller 114 or powertrain controller 100 may output one or more signals indicative of an engine-off condition (the engine is not producing output torque) to the air conditioning controller 144 via the CAN 112 so that the air conditioning controller 144 may adjust the operation of the climate control system 140. Similarly, the transmission controller 116 or powertrain controller 100 may output a signal indicative of the present gear of the transmission (e.g., reverse, 1st, 2nd, etc., neutral, or park (if so equipped). Similarly, the electrical energy storage controller 124 or powertrain controller 100 may transmit a signal indicative of energy reserves (e.g., ampere hours), so that the air conditioning controller 144 may adjust the operation of the climate control system 140. This energy reserves signal may include a SOC signal, a current draw signal, and/or a voltage signal, etc. The air conditioning controller 144 may receive other signals for assisting the control of the air conditioning unit 140, such as a signal from a parking brake sensor 186, a signal from a service brake sensor 188, etc.

As shown in FIGURE 1, the control panel 92 may include a plurality of inputs, such as switches, knobs, levers, etc., to operate the air conditioning unit 142. In one embodiment, the control panel 92 includes an A/C on/off switch 190, a temperature selector input 192, a blower fan selector input 194, and an air-outlet mode input 196. The A/C on/off switch 190 operates to start and stop the electrical compressor 166. The temperature setting input 192 sets the temperature in the passenger compartment at a requested temperature. The blower fan selector input 194 dictates the amount of air blown by the blower fan (not shown), and the air-outlet mode input 196 changes the discharge direction of the cooled air between a bilevel mode, a foot mode, a face mode, a foot/defroster mode, and a defroster mode. The optional mode switch 94 may be activated by the vehicle operator to indicate that the vehicle 20 is in an engine-off condition.

As shown in FIGURES 1 and 3, the air conditioning controller 144 is a separate controller dedicated to the climate control system 140. However, it will be appreciated that the air conditioning controller 144 may be an A/C control module, which could be software embedded within an existing on-board controller, such as the engine controller 114, a general purpose controller, such as a cab mounted controller, that controls multiple subsystems of the vehicle, or the powertrain controller 100.

In several embodiments, the air conditioning controller 144 and any one of the various motors, sensors, switches, actuators, etc. of the climate control system 140 may contain logic rules implemented in a variety of hardware circuitry components and/or programmed microprocessors to effect control of the climate control system 140 described herein. To that end, as further illustrated in FIGURE 1, one suitable embodiment of the air conditioning controller 144 includes a memory 200 with a Random Access Memory ("RAM") 204, and an Electronically Erasable, Programmable, Read-Only Memory ("EEPROM") 206, a processor 208, and an A/C control module 210 for providing functionality to the climate control system. The module 210 includes executable instructions that provide at least the following functions: 1) general control over the climate control system 140; and 2) specific control over the output of the electric compressor 166, as will be described in detail below.

Those skilled in the art and others will recognize that the EEPROM 206 is a non-volatile memory capable of storing data when power is not supplied to the controller 144. Conversely, the RAM 204 is a volatile form of memory for storing program instructions that are accessible by the processor 208. Typically, a fetch and execute cycle in which instructions are sequentially "fetched" from the RAM 204 and executed by the processor 208 is performed. In this regard, the processor 208 is configured to operate in accordance with program instructions that are sequentially fetched from the RAM 204.

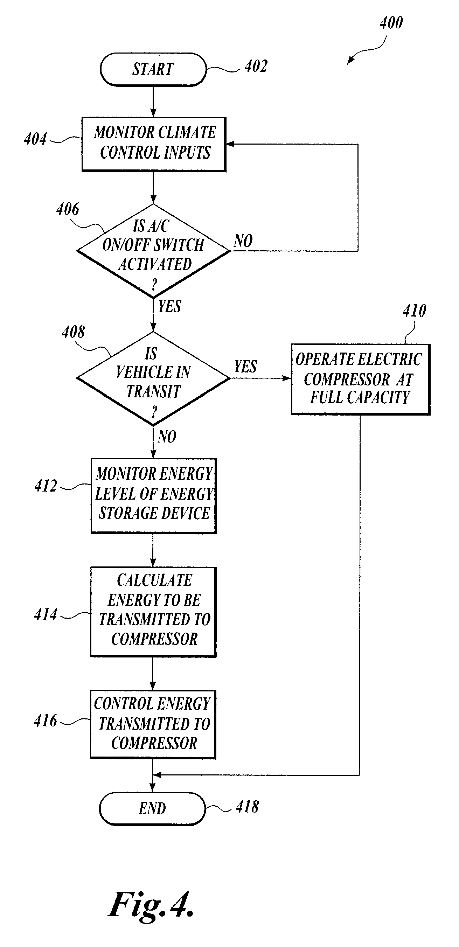

Turning now to FIGURE 4, there is shown a flow diagram of one exemplary embodiment of a climate control method 400 formed in accordance with aspects of the present invention that may be carried out by the air conditioning controller 144. The method 400 starts at block 402 and proceeds to block 404. At block 404, the air-conditioning controller 144 monitors various inputs of the climate control system 140, such as the A/C on/off switch 190, one or more control inputs, such as the temperature setting knob 194, blower fan selector knob 196, etc.

Next, at block 206, the Air conditioning controller 144 determines whether or not the A/C on/off switch 190 is activated. If the determination is "no," the method returns to block 404. If the controller 144 determines that the A/C on/off switch 190 is activated, the method proceeds to block 208. At block 208, the air conditioning controller 144 determines whether the vehicle 20 is in transit or whether the vehicle is parked. To determine whether the vehicle 20 is in transit or whether it is parked, the Air conditioning controller 144 passively receives or actively retrieves data from one or more sensors, switches, etc., regarding current or recent vehicle operating data.

For example, the Air conditioning controller 144 may obtain data from the engine output speed sensor 102, the transmission input speed from sensor 106, transmission output speed via sensor 108, or vehicle wheel speed via wheel sensors (not shown). The air conditioning controller 144 may receive other data, including the presently selected transmission gear (e.g., park, 1^{st}, 2^{nd}, etc.) or may obtain data from the parking brake sensor 186 indicating whether the parking brake 80 is activated. The air conditioning controller 144 may further receive data from the ignition switch 74 and the optional mode switch 194. For example, in some embodiments, the ignition switch 74 in the accessory (ACC) position or activation of the mode switch 94 indicates that the vehicle 20 is in a non-transit condition. It will be appreciated that the air conditioning controller 144 may receive these signals directly from the sensors, switches, and the like, or may receive such signals, some appropriately processed, from the engine controller 114, transmission controller 116, powertrain controller 100, etc. via the CAN 112.

If it is determined that the vehicle is in transit, the method 400 proceeds to block 410, where the electrical compressor 166 is operated at its full capacity, if necessary, in order to lower the temperature in the passenger compartment of the vehicle as selected by temperature setting input 192. If it is determined that the vehicle is parked, the method proceeds to block 412, where the air conditioning controller 144 passively receives or actively retrieves one or more signals indicative of the energy reserve level of the energy storage device 38. The one or more signals may include voltage data, SOC data, etc. It will be appreciated that the air conditioning controller 144 may obtain the one or more signals either directly from the energy storage device controller 126 or from other controllers or devices, such as the powertrain controller 100 via the CAN 102.

Next, at block 414, the energy reserve level data is used to determine the amount of energy to be transmitted to the compressor 166 via a power control device, e.g., DC to DC converter 184, AC inventor (not shown). It will be appreciated that the amount of energy supplied to the compressor 166 is less that the maximum capacity that could be sent during transit. In several embodiments, in order to aid in the determination of the amount of the energy to be transmitted, other information may be utilized. For example, the air conditioning controller 144 may obtain signals indicating current power demands from other operating vehicle systems, such as the entertainment system, e.g., radio, television, video player, etc., CB, GPS, and the like. The air conditioning controller 144 may also use signals generated from the A/C control panel 92, such as the temperature setting input 192, the blower fan selector input 194, etc., and from one or more temperature sensors 182, which indicate the amount of cooling desired by the vehicle operator, and the load created by the environmental conditions of the passenger compartment.

Based on these signals and/or others, as desired, the air conditioning controller 144 determines the energy level to be transmitted to the electrical compressor 166. The air conditioning controller 144 may determine the energy level as a percentage, e.g., 20%, of the remaining energy level so that the electrical compressor 166 may continuously operate to provide cooling to the passenger compartment for a given period of time. The percentage may be constant throughout its operation, or may be graduated lower as the energy reserve levels decrease. It will be appreciated that other methods may be used to calculate the energy transmitted to the electrical compressor 166.

Once the amount of energy to be transmitted to the electrical compressor 166 is calculated, the method 400 proceeds from block 414 to block 416, where suitable controls signals are generated based on the energy level determination made by the air conditioning controller 144 and transmitted to the power control device, such as the DC to DC converter 184, for controlling the energy supplied to the electrical compressor 166. The method 400 ends at block 418. It will be appreciated that the method 400 may include other steps, such as shutting off the power supplied to the electrical compressor 166 when the energy levels of the energy storage device 38 are below a preset threshold level. The threshold level may be selected at a sufficient level to start the internal combustion engine for recharging.

As a result, when the vehicle is parked (and the engine is shut off), the climate control system 140 automatically limits the energy into the air conditioning unit 142 to a preset amount of present energy storage device capacity. This allows the energy storage device 38 to perform for a predetermined period of time prior to recharging. On the other hand, when the vehicle is in transit (i.e., not parked), the climate control system 140 operates at maximum capacity. This occurs either when the vehicle is in motion, or when the vehicle is intermittently stopped, for example, at a stop light, stop sign, or the like.

The principles, representative embodiments, and modes of operation of the present invention have been described in the foregoing description. However, aspects of the present invention which are intended to be protected are not to be construed as limited to the particular embodiments disclosed. Further, the embodiments described herein are to be regarded as illustrative rather than restrictive. It will be appreciated that variations and changes may be made by others, and equivalents employed, without departing from the spirit of the present invention. Accordingly, it is expressly intended that all such variations, changes, and equivalents fall within the spirit and scope of the present invention, as claimed.

The embodiments of the invention in which an exclusive property or privilege is claimed are defined as follows:

## Claims

1. A climate control system for a hybrid heavy duty vehicle having an engine-on condition while driving and an engine-off condition while parked, comprising:
an electrically powered compressor;
an energy storage device connected in electrical communication with the electrically powered compressor for supplying power thereto;
at least one sensor capable of outputting signals indicative of an engine-on condition or an engine-off condition; and
a controlling component that receive the signals of the at least one sensor, and based on said signals and energy storage level data associated with the energy storage device, selectively controls the power supplied to the electrically powered compressor so as to provide a first compressor output level during a vehicle engine-on condition and a second, lower, compressor output level during a vehicle engine-off condition, wherein the second compressor output level is selected so as to allow the compressor to operate at a lower output as compared to the first compressor output level for a predetermined period of time.

2. The climate control system according to Claim 1, wherein the controlling component is a software component located on a hardware device.

3. The climate control system according to Claim 1, wherein the controlling component is hardware circuitry.

4. The climate control system according to Claims 1-3, wherein the signals indicative of an engine-on condition are selected from the group of signals consisting of a transmission gear signal, an engine speed signal, a transmission input speed signal, transmission output speed signal, and a wheel speed signal.

5. The climate control system according to Claims 1-4, wherein the signals indicative of an engine-off condition are selected from the group of signals consisting of a parking brake signal, a transmission gear signal, an ignition switch signal, and a mode switch signal.

6. The vehicle according to Claims 1, 4 or 5, wherein the controlling component includes:
a memory for storing data; and
a processor communicatively coupled to the memory, wherein the processor is programmed to:
cause an accumulation in the memory of one or more energy storage device data that is indicative of SOC;
cause an accumulation in the memory of vehicle operating data representing the signals indicative of an engine-on condition or an engine-off condition; and
based on said energy storage data and said vehicle operating data, output control signals to effect the amount of power to be transmitted to the electrically powered compressor.

7. A climate control method for a vehicle having an electrical compressor powered by an energy storage device, comprising the steps of:
obtaining a signal from an A/C power switch;
obtaining data regarding the current state of operation of the vehicle;
obtaining energy reserve level data of the energy storage device;
determining the energy level to be supplied to the electrical compressor; and
controlling the energy supplied to the electrical compressor.

8. The method according to Claim 7, wherein the data regarding the current state of operation of the vehicle includes data selected from the group consisting of transmission gear data, an engine speed data, transmission input speed data, transmission output speed data, wheel speed data, parking brake data, ignition switch data, and mode switch data.
